Europäisches Patentamt

European Patent Office

Office européen des brevets

(19)

(11) Numéro de publication: **0 307 296**
**A1**

## (12) DEMANDE DE BREVET EUROPEEN

(21) Numéro de dépôt: **88402224.5**

(22) Date de dépôt: **05.09.88**

(51) Int. Cl.⁴: **B 01 J 8/02**
F 25 B 17/08, C 09 K 5/00

(30) Priorité: **07.09.87 FR 8712389**

(43) Date de publication de la demande:
**15.03.89 Bulletin 89/11**

(84) Etats contractants désignés:
**AT BE CH DE GB IT LI LU NL SE**

(71) Demandeur: **SOCIETE NATIONALE ELF AQUITAINE (PRODUCTION)**
**Tour Elf 2, Place de la Coupole La Défense 6**
**F-92400 Courbevoie (FR)**

(72) Inventeur: **Balat, Marianne**
**14 Avenue Antoine Casenobe**
**F-66330 Saleilles (FR)**

**Roca, Alain**
**3 Rue Lafayette**
**F-66000 Perpignan (FR)**

**Spinner, Bernard**
**23 Avenue Joffre**
**F-66200 Corneilla del Vercol (FR)**

(74) Mandataire: **Boillot, Marc**
**SOCIETE NATIONALE ELF AQUITAINE Division**
**Propriété Industrielle Tour Elf**
**F-92078 Paris la Défense Cédex 45 (FR)**

(54) Procédé de conduite d'une réaction d'absorption ou de désorption entre un gaz et un solide.

(57) Procédé de conduite d'une réaction d'absorption ou de désorption entre un gaz et un solide selon lequel on constitue le milieu réactionnel en utilisant un solide pulvérulent ayant un tassement compris 5 et 60 % du tassement optimal de la réaction sans graphite.

EP 0 307 296 A1

**Description**

## PROCEDE DE CONDUITE D'UNE REACTION D'ABSORPTION OU DE DESORPTION ENTRE UN GAZ ET UN SOLIDE

La présente invention concerne un procédé de conduite d'une réaction d'absorption ou de désorption entre un gaz et un solide, ce solide étant constitué par un sel ou un mélange de sels susceptible de réagir avec le gaz en donnant une réaction d'absorption ou inversement une réaction de désorption, ces réactions ayant lieu en présence de graphite expansé. Le principe de ces réactions entre un gaz et un solide est par exemple décrit dans le brevet français n° 2.547.512 : Procédé de mise en oeuvre de réaction gaz-solide, ou encore dans le brevet français n° 2.548.340 : Pompe à chaleur triphasique, ou encore dans la demande de brevet français n° 85 08408 du 4 Juin 1985 : Procédé et dispositif thermochimique de stockage et déstockage de chaleur.

On a d'autre part étudié les cinétiques de réaction d'absorption ou de désorption en fonction de l'état initial des sels. En particulier, l'article publié dans la revue de Physique Appliquée 18 (1983) pages 107 à 112 de Février 1983, intitulé : "Optimisation des densités énergétiques de système stockage chimique basée sur des réactions solide gaz renversables", décrit une étude de la variation de la densité énergétique de la réaction en fonction du tassement initial du sel, cette réaction étant mise en oeuvre en l'absence de tout composé similaire à du graphite expansé. Ce tassement est exprimé en mole de sel anhydre par $m^3$. La courbe publiée à la page 109 de cette publication montre que pour chaque réaction étudiée, il existe une valeur de tassement pour laquelle la densité énergétique, exprimée en kWh par $m^3$, est maximale. Dans la suite du texte, cette valeur sera appelée tassement optimal de la réaction sans graphite.

La présente invention a pour but un procédé qui permette de mettre en oeuvre une réaction du type précité en présence de graphite expansé, le réactif constitué par un ou plusieurs sels étant présent dans le milieu réactionnel sous forme pulvérulente, ladite réaction ayant une puissance optimale.

Pour cela, l'invention prévoit un procédé de conduite d'une réaction d'absorption ou de désorption entre un gaz et un solide, ledit solide étant constitué par un ou plusieurs sels sous forme pulvérulente, en présence de graphite expansé, procédé selon lequel le milieu réactionnel comporte entre 0 -non inclus- et 60 % en masse de graphite expansé caractérisé en ce que pour constituer le milieu réactionnel, on utilise un solide pulvérulent ayant un tassement compris entre 5 et 60 % du tassement optimal de la réaction sans graphite.

Selon des modes préférés de réalisation de l'invention, le pourcentage du graphite expansé est compris entre 20 et 25 % inclus en masse et le tassement du sel est choisi dans une fourchette comprise entre 20 et 60 % du tassement optimal ; pour une teneur en graphite comprise entre 25 exclus et 35 % inclus, le tassement du sel est choisi entre 15 et 55 % de la valeur maximale ; pour une teneur en graphite comprise entre 35 exclus et 40 % inclus, le tassement du sel est choisi entre 15 et 50 % de la valeur optimale ; pour une teneur en graphite comprise entre 40 exclus et 45 % inclus, le tassement du sel est choisi entre 10 et 50 % de la valeur optimale ; pour une valeur de graphite comprise entre 45 exclus et 50 % inclus, le tassement du sel est choisi entre 10 et 45 % de la valeur optimale, et enfin pour une teneur en graphite comprise entre 50 exclus et 60 % inclus, le tassement du sel est choisi entre 5 et 40 % de la valeur optimale.

Selon un autre mode de réalisation de l'invention, le composé solide pulvérulent est constitué par un sel ou un mélange de sels, constitué lui-même par un composé d'un halogène choisi parmi Cl, Br, I, F et d'un élément choisi parmi : Li, Na, K, Rb, Be, Mg, Ca, Sr, Ba, Mn, Fe, Co, Ni, Cu, Ag, Au, Zn, Cd, Hg, Sn, Pb, Cr, Sb.

Mais aussi, ce sel ou ces mélanges de sels pourront être choisis parmi : $NH_4Cl$, $NH_4Br$, $NH_4I$, $NH_4NO_3$, $Sr(ClO_4)_2$, $Ba(ClO_4)_2$, $Fe_2(SO_4)_3$, $NiSO_4$, $CuSO_4$, $Ag(ClO_4)$, $AgNO_3$, $ZnSO_4$.

Mais d'autres caractéristiques et avantages de l'invention apparaîtront plus clairement à la lumière de la description suivante, donnée d'une manière illustrative et nullement limitative en référence aux figures annexées dans lesquelles

- la figure 1 représente la variation de la densité énergétique en fonction du tassement du sel pour une réaction sans graphite expansé,
- la figure 2 représente la variation de la puissance moyenne en fonction du tassement du mélange de sel et de graphite expansé.

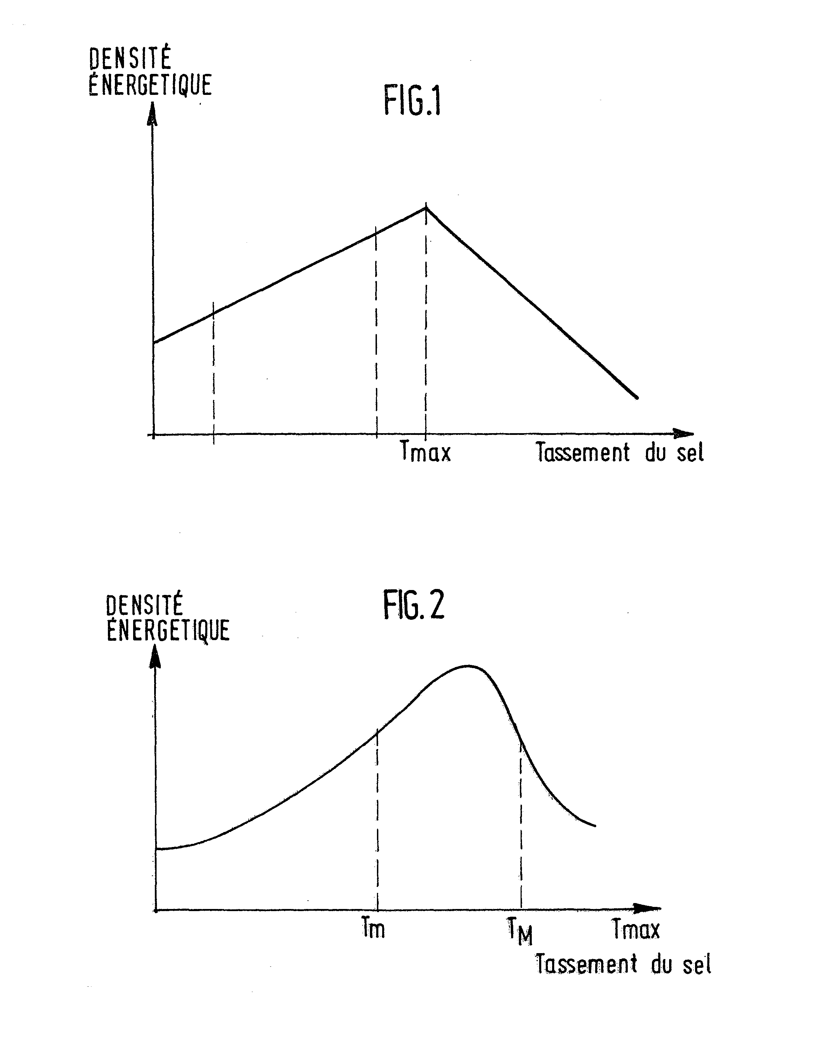

La variation de la densité énergétique qui est représentée sur la figure 1, est extraite de la publication citée ci-dessus et parue dans la revue Physique Appliquée, montre nettement que la densité énergétique est maximale pour une valeur bien particulière du tassement du sel, cette valeur étant notée Topt sur cette figure 1.

Sur la figure 2, on a représenté la variation de la puissance moyenne en fonction du tassement du mélange, c'est-à-dire du milieu réactionnel comprenant le ou les sels et du graphite expansé.

On remarque que la densité énergétique passe par un maximum qui est compris entre deux valeurs Tm et TM, ces valeurs correspondant à un certain pourcentage de la valeur Topt représentée figure 1.

A titre illustratif, on va donner ci-dessous les valeurs des mesures effectuées pour une réaction mettant en oeuvre du chlorure de calcium et de la méthylamine, réaction effectuée en présence de graphite expansé.

Pour un taux pondéral de 25 % de graphite expansé, l'optimum de tassement, dans un objectif de puissance, se situe environ à 244 kg de mélange par $m^3$, soit à 183 kg de sel anhydre (chlorure de calcium) par $m^3$, ce qui correspond à un tassement du sel égal à 45 % de la valeur Topt définie comme étant le tassement optimal de la réaction sans graphite. Pour un taux de 35 % de graphite expansé, l'optimum de tassement se situe à 186 kg de mélange par m³, ce qui correspond à un tassement égal à 35 % du tassement optimal tel que défini plus haut. En utilisant les courbes expérimentales similaires à la figure 2, on établit facilement que l'optimum de compactage se situe entre :

- 20 et 60 % du tassement optimal en présence de 25 % de graphite et entre 15 et 55 % en présence de 35 % de graphite.

De la même façon, on a vérifié que pour une réaction mettant en oeuvre du chlorure de lithium en présence de méthylamine, l'optimum, pour 40 % de graphite expansé, se situe à une valeur de 86 kg de sel par m³, ce qui correspond pour l'équilibre entre 2 et 3 moles de méthylamine, à 45 % du tassement optimal.

On a représenté dans les tableaux suivants, les fourchettes de tassement qui permettent d'optimiser simultanément la puissance et la densité énergétique, ces fourchettes étant établies pour des pourcentages divers de graphite expansé et pour toute une série d'équilibres avec l'ammoniac et toute une série d'équilibres de différents sels avec la méthylamine.

Sur ces tableaux, on a représenté sur la première colonne la nature du sel, sur la deuxième colonne l'équilibre concerné entre le sel et les molécules de gaz, sur la troisième colonne les valeurs minimales et maximales de masse de sel anhydre exprimées en kg par m³, correspondant à 25 % de graphite expansé, alors que les trois dernières colonnes contiennent des indications des minimum et maximum de tassement pour 35 %, 50 % et 60 % de graphite expansé. La première série de tableaux concerne les réactions effectuées en présence d'ammoniac alors que la deuxième série concerne des réactions effectuées en présence de méthylamine.

Avec $NH_3$

| Sels | Equilibres | 25 % | 35 % | 50 % | 60 % |
|---|---|---|---|---|---|
| LiCl | 0-1 | 180/560 | 130/510 | 90/420 | 40/370 |
| | 1-2 | 120/360 | 90/330 | 60/270 | 30/240 |
| | 2-3 | 80/270 | 60/250 | 40/200 | 20/180 |
| | 3-4 | 70/210 | 50/200 | 30/160 | 10/140 |
| | 4-5 | 50/180 | 40/160 | 20/130 | 10/120 |
| LiBr | 0-1 | 340/1040 | 250/950 | 170/780 | 80/690 |
| | 1-2 | 230/690 | 170/640 | 110/520 | 50/460 |
| | 2-3 | 170/520 | 130/480 | 80/390 | 40/350 |
| | 3-4 | 140/420 | 100/380 | 70/310 | 30/280 |
| | 4-5 | 120/350 | 80/320 | 50/260 | 20/230 |
| LiI | 0-1 | 460/1390 | 340/1270 | 230/1040 | 110/930 |
| | 1-2 | 320/970 | 240/890 | 160/730 | 80/650 |
| | 2-3 | 240/740 | 180/680 | 120/560 | 60/500 |
| | 3-4 | 200/600 | 150/550 | 100/450 | 50/400 |
| | 4-5 | 160/510 | 120/460 | 80/380 | 40/340 |
| | 5-5,5 | 150/470 | 110/430 | 70/350 | 30/320 |
| NaCl | 0-2,5 | 130/390 | 90/360 | 60/300 | 30/260 |
| | 2,5-5 | 70/230 | 50/210 | 30/180 | 20/160 |
| NaBr | 0-5,25 | 120/380 | 90/350 | 60/280 | 30/250 |
| NaI | 0-4 | 210/640 | 150/580 | 100/480 | 50/430 |
| | 4-4,5 | 190/590 | 140/540 | 90/440 | 40/390 |
| | 4,5-6 | 150/470 | 110/430 | 70/350 | 30/310 |
| KI | 0-4 | 210/650 | 160/600 | 100/490 | 50/430 |
| | 4-6 | 160/490 | 120/450 | 80/370 | 40/330 |
| RbBr | 0-3 | 260/800 | 190/730 | 130/600 | 60/530 |
| RbI | 0-6 | 200/610 | 150/560 | 100/460 | 50/410 |
| $NH_4Cl$ | 0-3 | 90/290 | 70/270 | 40/220 | 20/200 |
| $NH_4Br$ | 0-1 | 290/900 | 220/830 | 140/680 | 70/600 |
| | 1-5 | 110/360 | 80/330 | 50/270 | 20/240 |
| | ou 1-4 | 130/420 | 100/380 | 60/320 | 30/280 |
| | 4-6 | 100/310 | 70/290 | 50/230 | 20/210 |
| $NH_4I$ | 0-1 | 350/1050 | 260/970 | 170/790 | 80/700 |
| | 1-2 | 260/810 | 200/740 | 130/610 | 60/540 |
| | 2-3 | 210/660 | 160/600 | 100/490 | 50/440 |
| | 3-5 | 150/480 | 110/440 | 70/360 | 30/320 |
| | 5-6 | 130/420 | 100/390 | 60/320 | 30/280 |

| Sels | Equilibres | 25 % | 35 % | 50 % | 60 % |
|------|-----------|------|------|------|------|
| $NH_4NO_3$ | 0-0,5 | 270/820 | 200/750 | 130/610 | 60/550 |
| $BeCl_2$ | 0-2 | 170/520 | 120/480 | 80/390 | 40/350 |
| | 2-4 | 110/340 | 80/310 | 50/260 | 20/230 |
| | 4-6 | 80/250 | 60/230 | 40/190 | 20/170 |
| | 6-12 | 40/140 | 30/130 | 20/110 | 10/100 |
| $BeBr_2$ | 0-4 | 220/680 | 160/620 | 110/510 | 50/460 |
| | 4-6 | 160/510 | 120/470 | 80/380 | 40/340 |
| | 6-10 | 110/340 | 80/310 | 50/260 | 20/230 |
| $BeI_2$ | 0-4 | 320/980 | 240/900 | 160/740 | 80/650 |
| | 4-6 | 240/750 | 180/690 | 120/560 | 60/500 |
| | 6-13 | 130/410 | 100/380 | 60/310 | 30/270 |
| $MgCl_2$ | 0-1 | 280/870 | 210/790 | 140/650 | 70/580 |
| | 1-2 | 210/630 | 150/580 | 100/470 | 50/420 |
| | 2-4 | 130/410 | 100/370 | 60/310 | 30/270 |
| | 4-6 | 90/300 | 70/280 | 40/230 | 20/200 |
| $MgBr_2$ | 0-1 | 490/1480 | 370/1360 | 240/1110 | 120/990 |
| | 1-2 | 370/1110 | 270/1020 | 180/830 | 90/740 |
| | 2-6 | 180/550 | 130/510 | 90/420 | 40/370 |
| $MgI_2$ | 0-1 | 630/1900 | 470/1740 | 310/1430 | 150/1270 |
| | 1-2 | 490/1480 | 370/1350 | 240/1110 | 120/990 |
| | 2-6 | 260/780 | 190/720 | 130/590 | 60/520 |
| $CaCl_2$ | 0-1 | 280/870 | 210/800 | 140/650 | 70/580 |
| | 1-2 | 210/660 | 160/600 | 100/490 | 50/440 |
| | 2-4 | 170/530 | 130/480 | 80/400 | 40/350 |
| | 4-8 | 100/330 | 80/300 | 50/240 | 20/220 |
| $CaBr_2$ | 0-1 | 470/1420 | 350/1300 | 230/1060 | 110/950 |
| | 1-2 | 360/1090 | 270/1000 | 180/820 | 90/730 |
| | 2-6 | 180/570 | 140/530 | 90/430 | 40/380 |
| | 6-8 | 150/460 | 110/420 | 70/350 | 30/310 |
| $CaI_2$ | 0-1 | 590/1780 | 440/1630 | 290/1330 | 140/1190 |
| | 1-2 | 470/1420 | 350/1300 | 230/1060 | 110/950 |
| | 2-3 | 390/1180 | 290/1080 | 190/890 | 90/790 |
| | 3-6 | 260/780 | 190/720 | 130/590 | 60/520 |
| $SrCl_2$ | 0-1 | 410/1240 | 300/1130 | 200/930 | 100/830 |
| | 1-8 | 140/430 | 100/400 | 70/320 | 30/290 |
| | ou 0-8 | | | | |

| Sels | Equilibres | 25 % | 35 % | 50 % | 60 % |
|---|---|---|---|---|---|
| SrBr$_2$ | 0-1 | 590/1770 | 440/1630 | 290/1330 | 140/1180 |
| | 1-2 | 450/1360 | 340/1250 | 220/1020 | 110/910 |
| | 2-6 | 240/710 | 170/650 | 110/530 | 50/480 |
| | 6-8 | 190/570 | 140/530 | 90/430 | 40/380 |
| SrI$_2$ | 0-1 | 680/2050 | 510/1880 | 340/1540 | 170/1370 |
| | 1-2 | 540/1640 | 400/1500 | 270/1230 | 130/1090 |
| | 2-6 | 300/910 | 220/830 | 150/680 | 70/610 |
| | 6-8 | 240/740 | 180/680 | 120/560 | 60/500 |
| Sr(ClO$_4$)$_2$ | 0-2 | 400/1220 | 300/1120 | 200/920 | 100/810 |
| | 2-6 | 230/710 | 170/650 | 110/540 | 50/480 |
| | 6-7 | 210/650 | 160/590 | 100/490 | 50/430 |
| BaCl$_2$ | 0-8 | 190/590 | 140/540 | 90/440 | 40/390 |
| BaBr$_2$ | 0-1 | 680/2040 | 510/1870 | 340/1530 | 170/1360 |
| | 1-2 | 520/1590 | 390/1450 | 260/1190 | 130/1060 |
| | 2-4 | 360/1100 | 270/1010 | 180/820 | 90/730 |
| | 4-8 | 220/680 | 160/620 | 110/510 | 50/450 |
| BaI$_2$ | 0-2 | 610/1860 | 460/1710 | 300/1400 | 150/1240 |
| | 2-4 | 440/1330 | 330/1220 | 220/1000 | 110/890 |
| | 4-6 | 340/1040 | 250/950 | 170/780 | 80/690 |
| | 6-8 | 280/850 | 210/780 | 140/640 | 70/570 |
| | 8-9 | 250/780 | 190/710 | 120/590 | 60/520 |
| Ba(ClO$_4$)$_2$ | 0-5 | 290/880 | 210/800 | 140/660 | 70/590 |
| | 5-6 | 260/790 | 190/730 | 130/590 | 60/530 |
| MnCl$_2$ | 0-0,5 | 450/1380 | 340/1270 | 220/1040 | 110/920 |
| | 0,5-1 | 370/1120 | 270/1030 | 180/840 | 90/750 |
| | 1-2 | 300/910 | 220/830 | 150/680 | 70/610 |
| | 2-6 | 150/460 | 110/420 | 70/350 | 30/310 |
| MnBr$_2$ | 0-1 | 650/1960 | 490/1800 | 320/1470 | 160/1310 |
| | 1-2 | 430/1300 | 320/1190 | 210/980 | 100/870 |
| | 2-6 | 240/730 | 180/670 | 120/550 | 60/490 |
| MnI$_2$ | 0-2 | 550/1650 | 410/1520 | 270/1240 | 130/1100 |
| | 2-6 | 310/940 | 230/870 | 150/710 | 70/630 |
| FeCl$_2$ | 0-1 | 380/1170 | 290/1070 | 190/880 | 90/780 |
| | 1-2 | 280/840 | 210/770 | 140/630 | 70/560 |
| | 2-6 | 150/480 | 110/440 | 70/360 | 40/320 |

| Sels | Equilibres | 25 % | 35 % | 50 % | 60 % |
|---|---|---|---|---|---|
| $FeBr_2$ | 0-1 | 600/1810 | 450/1660 | 300/1360 | 150/1210 |
| | 1-2 | 440/1340 | 330/1230 | 220/1000 | 110/890 |
| | 2-6 | 240/740 | 180/680 | 120/560 | 60/500 |
| $FeI_2$ | 0-2 | 570/1710 | 420/1570 | 280/1290 | 140/1140 |
| | 2-6 | 300/930 | 230/850 | 150/700 | 70/620 |
| $Fe_2(SO_4)_3$ | 0-3 | 390/1180 | 290/1080 | 190/880 | 90/790 |
| | 3-6 | 280/860 | 210/790 | 140/650 | 70/570 |
| | 6-12 | 180/560 | 140/510 | 90/420 | 40/370 |
| $CoCl_2$ | 0-1 | 400/1220 | 300/1120 | 200/920 | 100/820 |
| | 1-2 | 290/880 | 210/800 | 140/660 | 70/590 |
| | 2-6 | 160/500 | 120/460 | 80/380 | 40/340 |
| $CoBr_2$ | 0-1 | 620/1880 | 470/1730 | 310/1410 | 150/1260 |
| | 1-2 | 460/1390 | 340/1270 | 230/1040 | 110/920 |
| | 2-6 | 250/770 | 190/710 | 120/580 | 60/510 |
| $CoI_2$ | 0-2 | 590/1780 | 440/1630 | 290/1340 | 140/1190 |
| | 2-6 | 310/950 | 230/870 | 150/720 | 70/640 |
| $NiCl_2$ | 0-1 | 420/1260 | 310/1160 | 210/950 | 100/840 |
| | 1-2 | 290/900 | 220/820 | 140/670 | 70/600 |
| | 2-6 | 130/420 | 100/380 | 60/310 | 30/280 |
| | 6-7 | 120/370 | 90/340 | 60/280 | 30/250 |
| | 7-9 | 90/300 | 70/270 | 50/230 | 20/200 |
| | 9-10 | 90/270 | 60/250 | 40/210 | 20/180 |
| $NiBr_2$ | 0-1 | 640/1930 | 480/1770 | 320/1450 | 160/1290 |
| | 1-2 | 460/1410 | 350/1290 | 230/1060 | 110/940 |
| | 2-6 | 220/680 | 160/620 | 110/510 | 50/450 |
| $NiI_2$ | 0-2 | 600/1810 | 450/1660 | 300/1360 | 150/1210 |
| | 2-6 | 300/920 | 220/840 | 150/690 | 70/610 |
| $NiSO_4$ | 0-1 | 460/1380 | 340/1270 | 230/1040 | 110/920 |
| | 1-2 | 330/1010 | 250/920 | 160/760 | 80/670 |
| | 2-6 | 160/480 | 120/440 | 80/360 | 40/320 |
| $CuCl$ | 0-0,5 | 540/1630 | 400/1490 | 270/1220 | 130/1090 |
| | 0,5-1 | 400/1210 | 300/1110 | 200/910 | 100/810 |
| | 1-1,5 | 320/970 | 240/890 | 160/730 | 80/650 |
| | 1,5-3 | 190/600 | 140/550 | 90/450 | 50/400 |
| $CuBr$ | 0-1 | 530/1600 | 390/1460 | 260/1200 | 130/1070 |
| | 1-1,5 | 430/1300 | 320/1200 | 210/970 | 100/860 |
| | 1,5-3 | 270/830 | 200/760 | 130/620 | 60/550 |

| Sels | Equilibres | 25 % | 35 % | 50 % | 60% |
|---|---|---|---|---|---|
| CuI | 0-0,5 | 820/2460 | 610/2260 | 400/1850 | 200/1640 |
| | 0,5-1 | 640/1940 | 480/1780 | 320/1450 | 160/1290 |
| | 1-1,5 | 530/1600 | 390/1460 | 260/1200 | 130/1070 |
| | 1,5-2 | 450/1360 | 330/1250 | 220/1020 | 110/910 |
| | 2-3 | 340/1050 | 260/960 | 170/790 | 80/700 |
| $CuCl_2$ | 0-2 | 290/900 | 220/820 | 140/680 | 70/600 |
| | $2-3^1/3$ | 210/660 | 160/600 | 100/490 | 50/440 |
| | $3^1/3-5$ | 160/490 | 120/450 | 80/370 | 40/330 |
| $CuBr_2$ | 0-2 | 450/1380 | 340/1270 | 220/1040 | 110/920 |
| | $2-3^1/3$ | 340/1030 | 250/940 | 170/770 | 80/690 |
| | $3^1/3-5$ | 250/780 | 190/710 | 120/590 | 60/520 |
| $CuSO_4$ | 0-1 | 450/1380 | 340/1270 | 230/1040 | 110/920 |
| | 1-2 | 330/1010 | 250/930 | 160/760 | 80/680 |
| | 2-4 | 220/660 | 160/610 | 110/500 | 50/440 |
| | 4-5 | 180/570 | 140/520 | 90/430 | 40/380 |
| AgCl | 0-1 | 560/1690 | 420/1550 | 280/1270 | 140/1130 |
| | 1-1,5 | 450/1360 | 330/1240 | 220/1020 | 110/900 |
| | 1,5-3 | 280/850 | 210/780 | 140/640 | 70/570 |
| AgBr | 0-1 | 690/2080 | 510/1910 | 340/1560 | 170/1390 |
| | 1-1,5 | 560/1690 | 420/1550 | 280/1270 | 140/1130 |
| | 1,5-3 | 350/1080 | 260/990 | 170/810 | 90/720 |
| AgI | 0-0,5 | 900/2730 | 680/2500 | 450/2050 | 220/1820 |
| | 0,5-1 | 730/2190 | 540/2010 | 360/1650 | 180/1460 |
| | 1-1,5 | 610/1840 | 450/1680 | 300/1380 | 150/1220 |
| $Ag(ClO_4)$ | 0-2 | 330/1000 | 250/920 | 160/750 | 80/670 |
| | 2-3 | 270/840 | 200/770 | 130/630 | 60/560 |
| $AgNO_3$ | 0-2 | 370/1140 | 280/1050 | 190/860 | 90/760 |
| AuCl | 0-1 | 820/2470 | 610/2260 | 410/1850 | 200/1640 |
| | 1-2 | 560/1710 | 420/1560 | 280/1280 | 140/1140 |
| | 2-6 | 250/770 | 190/700 | 120/580 | 60/510 |
| AuBr | 0-1 | 910/2760 | 680/2530 | 450/2070 | 230/1840 |
| | 1-2 | 640/1950 | 480/1780 | 320/1460 | 160/1300 |
| | 2-3 | 500/1500 | 370/1380 | 250/1130 | 120/1000 |
| | 3-4 | 400/1220 | 300/1120 | 200/920 | 100/820 |
| | 4-6 | 290/890 | 220/820 | 140/670 | 70/600 |

| Sels | Equilibres | 25 % | 35 % | 50 % | 60 % |
|------|-----------|------|------|------|------|
| AuI | 0-1 | 1000/3020 | 750/2770 | 500/2260 | 250/2010 |
| | 1-2 | 720/2170 | 540/1990 | 360/1630 | 180/1450 |
| | 2-3 | 560/1690 | 420/1550 | 280/1270 | 140/1130 |
| | 3-6 | 330/1020 | 250/940 | 170/770 | 80/680 |
| $ZnCl_2$ | 0-1 | 370/1140 | 280/1040 | 180/860 | 90/760 |
| | 1-2 | 280/840 | 210/770 | 140/630 | 70/560 |
| | 2-4 | 180/560 | 130/510 | 90/420 | 40/370 |
| | 4-6 | 170/520 | 120/470 | 80/390 | 40/350 |
| $ZnBr_2$ | 0-1 | 570/1720 | 420/1580 | 280/1290 | 140/1150 |
| | 1-2 | 430/1300 | 320/1190 | 210/980 | 100/870 |
| | 2-4 | 290/880 | 210/810 | 140/660 | 70/590 |
| | 4-5 | 270/810 | 200/750 | 130/610 | 60/540 |
| | 5-6 | 260/790 | 190/720 | 130/590 | 60/530 |
| $ZnI_2$ | 0-1 | 680/2070 | 510/1900 | 340/1550 | 170/1380 |
| | 1-2 | 540/1630 | 400/1490 | 270/1220 | 130/1090 |
| | 2-4 | 370/1140 | 280/1050 | 190/860 | 90/760 |
| | 4-6 | 320/970 | 240/890 | 160/730 | 80/650 |
| $ZnSO_4$ | 0-0,5 | 550/1670 | 410/1530 | 270/1250 | 130/1110 |
| | 0,5-1 | 450/1370 | 340/1260 | 230/1030 | 110/920 |
| | 1-2 | 330/1010 | 250/930 | 160/760 | 80/680 |
| | 2-3 | 260/800 | 200/740 | 130/600 | 60/540 |
| | 3-4 | 220/670 | 160/610 | 110/500 | 50/440 |
| | 4-5 | 180/570 | 140/520 | 90/430 | 40/380 |
| $CdCl_2$ | 0-1 | 580/1740 | 430/1600 | 290/1310 | 140/1160 |
| | 1-2 | 450/1360 | 330/1250 | 220/1020 | 110/910 |
| | 2-4 | 280/870 | 210/800 | 140/660 | 70/580 |
| | 4-6 | 210/650 | 160/600 | 100/490 | 50/440 |
| $CdBr_2$ | 0-1 | 750/2270 | 560/2080 | 370/1700 | 180/1510 |
| | 1-2 | 590/1790 | 440/1640 | 290/1340 | 140/1200 |
| | 2-6 | 300/910 | 220/830 | 150/680 | 70/610 |
| $CdI_2$ | 0-2 | 660/2000 | 500/1840 | 330/1500 | 160/1340 |
| | 2-6 | 360/1090 | 270/1000 | 180/820 | 90/730 |
| $HgCl_2$ | 0-1,5 | 840/2530 | 630/2320 | 420/1900 | 210/1690 |
| | 1,5-2 | 610/1860 | 460/1710 | 300/1400 | 150/1240 |
| | 2-8 | 210/650 | 160/600 | 100/490 | 50/440 |
| $HgBr_2$ | 0-2 | 790/2380 | 590/2180 | 390/1790 | 190/1590 |
| | 2-8 | 270/830 | 200/760 | 130/630 | 60/560 |

| Sels | Equilibres | 25 % | 35 % | 50 % | 60 % |
|---|---|---|---|---|---|
| $HgI_2$ | 0-$^4$/3 | 860/2600 | 640/2380 | 430/1950 | 210/1730 |
| | $^4$/3-2 | 830/2490 | 620/2280 | 410/1870 | 200/1660 |
| | 2-6 | 400/1230 | 300/1130 | 200/920 | 100/820 |
| $HgF_2$ | 0-2 | 730/2220 | 550/2030 | 360/1670 | 180/1480 |
| $SnCl_2$ | 0-4 | 250/770 | 190/700 | 120/580 | 60/510 |
| | 4-9 | 130/420 | 100/380 | 60/310 | 30/280 |
| $SnBr_2$ | 0-1 | 690/2100 | 520/1930 | 350/1580 | 170/1400 |
| | 1-2 | 530/1600 | 390/1460 | 260/1200 | 130/1070 |
| | 2-3 | 420/1290 | 320/1180 | 210/970 | 100/860 |
| | 3-5 | 300/930 | 230/850 | 150/700 | 70/620 |
| | 5-9 | 190/600 | 140/550 | 90/450 | 40/400 |
| $SnI_2$ | 0-1 | 770/2340 | 580/2140 | 380/1760 | 190/1560 |
| | 1-2 | 610/1850 | 460/1700 | 300/1390 | 150/1240 |
| | 2-3 | 500/1530 | 380/1410 | 250/1150 | 120/1020 |
| | 3-5 | 370/1140 | 280/1050 | 180/860 | 90/760 |
| | 5-9 | 250/760 | 180/690 | 120/570 | 60/500 |
| | 9-10 | 230/700 | 170/640 | 110/520 | 50/470 |
| $PbCl_2$ | 0-1 | 760/2300 | 570/2110 | 380/1720 | 190/1530 |
| | 1-1,5 | 650/1960 | 480/1790 | 320/1470 | 160/1310 |
| | 1,5-2 | 560/1710 | 420/1560 | 280/1280 | 140/1140 |
| | 2-3,25 | 420/1290 | 320/1180 | 210/970 | 100/860 |
| | 3,25-8 | 220/670 | 160/620 | 110/510 | 50/450 |
| $PbBr_2$ | 0-1 | 910/2740 | 680/2520 | 450/2060 | 220/1830 |
| | 1-2 | 690/2090 | 520/1920 | 340/1570 | 170/1390 |
| | 2-3 | 560/1690 | 420/1550 | 280/1270 | 140/1130 |
| | 3-5,5 | 370/1140 | 280/1040 | 180/860 | 90/760 |
| | 5,5-8 | 280/860 | 210/790 | 140/650 | 70/580 |
| $PbI_2$ | 0-0,5 | 1050/3170 | 790/2900 | 520/2380 | 260/2110 |
| | 0,5-1 | 920/2770 | 690/2540 | 460/2080 | 230/1850 |
| | 1-2 | 730/2210 | 550/2030 | 360/1660 | 180/1480 |
| | 2-5 | 450/1380 | 340/1270 | 220/1040 | 110/920 |
| | 5-8 | 330/1000 | 250/920 | 160/750 | 80/670 |
| $CrCl_2$ | 0-6 | 150/460 | 110/420 | 70/350 | 30/310 |
| $CrBr_2$ | 0-6 | 230/700 | 170/640 | 110/530 | 50/470 |
| $CrI_2$ | 0-6 | 270/840 | 200/770 | 130/630 | 60/560 |

| Sels | Equilibres | 25 % | 35 % | 50 % | 60 % |
|---|---|---|---|---|---|
| $SbF_3$ | 0-1 | 600/1810 | 450/1660 | 300/1360 | 150/1210 |
| | 1-2 | 450/1360 | 330/1250 | 220/1020 | 110/910 |
| | 2-3 | 360/1090 | 270/1000 | 180/820 | 90/730 |
| | 3-4 | 250/760 | 180/700 | 120/570 | 60/510 |
| | 4-6 | 180/560 | 130/520 | 90/420 | 40/380 |

Avec CH3NH2

| Sels | Equilibres | 25 % | 35 % | 50 % | 60 % |
|---|---|---|---|---|---|
| LiCl | 0-1 | 120/380 | 90/350 | 60/290 | 30/260 |
| | 1-2 | 80/250 | 60/230 | 40/190 | 20/170 |
| | 2-3 | 30/120 | 20/110 | 10/90 | 10/80 |
| | 3-4 | 30/110 | 20/100 | 10/90 | 10/80 |
| MgCl2 | 0-2 | 140/430 | 100/390 | 70/320 | 30/290 |
| | 2-4 | 80/250 | 60/230 | 40/190 | 20/170 |
| | 4-8 | 40/140 | 30/130 | 20/110 | 10/100 |
| CaCl2 | 0-1 | 220/680 | 160/620 | 110/510 | 50/460 |
| | 1-2 | 150/460 | 110/430 | 70/350 | 30/310 |
| | 2-4 | 90/280 | 70/260 | 40/210 | 20/190 |
| | 4-6 | 80/250 | 60/230 | 40/190 | 20/170 |
| SrCl2 | 0-5/3 | 240/740 | 180/680 | 120/550 | 60/490 |
| | 5/3-3 | 160/500 | 120/460 | 80/380 | 40/330 |
| MnCl2 | 0-1 | 280/850 | 210/780 | 140/640 | 70/570 |
| | 1-2 | 180/560 | 130/510 | 90/420 | 40/380 |
| | 2-6 | 100/310 | 70/290 | 50/230 | 20/210 |
| FeCl2 | 0-5 | 90/280 | 60/260 | 40/210 | 20/190 |
| CoCl2 | 0-4 | 110/350 | 80/320 | 50/260 | 20/230 |
| | 4-6 | 80/250 | 60/230 | 40/190 | 20/170 |
| NiCl2 | 0-4 | 110/350 | 80/320 | 50/270 | 20/240 |
| | 4-6 | 80/250 | 60/230 | 40/190 | 20/170 |
| CuCl2 | 0-4 | 110/360 | 80/330 | 50/270 | 30/240 |
| ZnCl2 | 0-2 | 190/590 | 140/540 | 90/440 | 40/390 |
| | 2-4 | 150/460 | 110/420 | 70/350 | 30/310 |
| | 4-6 | 120/380 | 90/350 | 60/290 | 30/260 |
| LiBr | 0-1 | 240/730 | 180/670 | 120/550 | 60/490 |
| | 1-2 | 140/440 | 110/410 | 70/330 | 30/300 |
| | 2-3 | 100/320 | 70/290 | 50/240 | 20/210 |
| | 3-4 | 80/250 | 60/230 | 40/190 | 20/170 |
| | 4-5 | 60/210 | 50/190 | 30/160 | 10/140 |
| MnBr2 | 0-4 | 180/550 | 130/510 | 90/410 | 40/370 |
| | 4-6 | 130/400 | 90/360 | 60/300 | 30/270 |
| FeBr2 | 0-5 | 150/470 | 110/430 | 70/350 | 30/310 |
| COBr2 | 0-6 | 130/410 | 100/370 | 60/310 | 30/270 |
| NiBr2 | 0-6 | 130/410 | 100/380 | 60/310 | 30/270 |

| Sels | Equilibres | 25 % | 35 % | 50 % | 60 % |
|---|---|---|---|---|---|
| CuBr$_2$ | 0-4 | 190/590 | 140/540 | 90/440 | 40/390 |
| ZnBr$_2$ | 0-5 | 150/470 | 110/440 | 70/360 | 30/320 |
| CdBr$_2$ | 0-3 | 280/850 | 210/780 | 140/640 | 70/570 |
| LiI | 0-0,25 | 600/1810 | 450/1660 | 300/1360 | 150/1210 |
| | 0,25-0,5 | 470/1430 | 350/1310 | 230/1080 | 110/960 |
| | 0,5-1 | 330/1010 | 250/930 | 160/760 | 80/680 |
| | 1-2 | 210/640 | 150/590 | 100/480 | 50/430 |
| | 2-3 | 150/470 | 110/430 | 70/350 | 30/310 |
| | 3-3,5 | 130/410 | 100/380 | 60/310 | 30/280 |
| MnI$_2$ | 0-6 | 180/550 | 130/500 | 90/410 | 40/370 |
| FeI$_2$ | 0-5 | 210/640 | 150/590 | 100/480 | 50/430 |
| CoI$_2$ | 0-4 | 250/780 | 190/720 | 120/590 | 60/520 |
| | 4-6 | 180/560 | 140/520 | 90/420 | 40/380 |
| NiI$_2$ | 0-6 | 180/570 | 140/520 | 90/430 | 40/380 |
| ZnI$_2$ | 0-5 | 210/640 | 150/590 | 100/480 | 50/430 |
| CdI$_2$ | 0-3 | 350/1080 | 260/990 | 170/810 | 80/720 |
| NiSO$_4$ | 0-3 | 170/510 | 120/470 | 80/390 | 40/340 |
| | 3-4,5 | 120/370 | 90/340 | 60/280 | 30/250 |
| | 4,5-5,5 | 100/310 | 70/290 | 50/240 | 20/210 |
| | 5,5-8 | 70/230 | 50/210 | 30/170 | 10/150 |
| Fe$_2$(SO$_4$)$_3$ | 0-7 | 170/530 | 130/490 | 80/400 | 40/350 |
| | 7-12 | 110/350 | 80/320 | 50/270 | 20/240 |
| ZnSO$_4$ | 0-3 | 170/530 | 130/480 | 80/400 | 40/350 |
| | 3-3,12 | 160/510 | 120/470 | 80/380 | 40/340 |
| | 3,12-3,5 | 150/470 | 110/430 | 70/350 | 30/310 |
| | 3,5-4,25 | 130/400 | 100/370 | 60/300 | 30/270 |

Mais l'invention n'est pas limitée aux modes de realisation décrits. Elle en englobe au contraire toutes les variantes.

## Revendications

1 - Procédé de conduite d'une réaction d'absorption ou de désorption entre un gaz et un solide, ledit solide étant constitué par un ou plusieurs sels sous forme pulvérulente, en présence de graphite expansé, un procédé selon lequel le milieu réactionnel comporte entre 0 -non inclus- et 60 % en masse de graphite expansé, caractérisé en ce que pour constituer le milieu réactionnel, on utilise un solide pulvérulent ayant un tassement compris entre 5 et 60 % du tassement optimal de la réaction sans graphite.

2 - Procédé selon la revendication I, selon lequel le pourcentage du graphite expansé est compris entre 20 et 25 % inclus en masse, caractérisé en ce que le tassement du sel est choisi dans une fourchette comprise entre 20 et 60 % du tassement optimal.

3 - Procédé selon la revendication 1, dans lequel le pourcentage du graphite expansé est compris entre 25 exclus et 30 % inclus en masse, caractérisé en ce que le tassement du sel est choisi entre 15 et 55 % du tassement optimal.

4 - Procédé selon la revendication 1, selon lequel le pourcentage du graphite expansé est compris entre 35 exclus et 40 % inclus, caractérisé en ce que le tassement du sel est choisi entre 15 et 50 % du tassement optimal.

5 - Procédé selon la revendication 1, dans lequel le pourcentage en graphite expansé est compris entre 40 exclus et 45 % inclus en masse, caractérisé en ce que le tassement du sel est choisi entre 10 et 50 % du tassement optimal.

6 - Procédé selon la revendication 1, dans lequel le pourcentage de graphite expansé est compris entre 45 exclus et 50 % inclus en masse, caractérisé en ce que le tassement du sel est choisi entre 10 et 45 % du tassement optimal.

7 - Procédé selon la revendication 1, dans lequel la teneur en graphite expansé est comprise entre 50 exclus et 60 % en masse, caractérisé en ce que le tassement du sel est choisi dans une fourchette comprise 5 et 40 % du tassement optimal.

8 - Procédé selon l'une des revendications précédentes, caractérisé en ce qu'il est mis en oeuvre dans une pompe à chaleur chimique.

FIG.1

DENSITÉ ÉNERGETIQUE

Tmax          Tassement du sel

FIG.2

DENSITÉ ÉNERGETIQUE

Tm          T$_M$          Tmax

Tassement du sel

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 547 512 (ELF AQUITAINE) <br> * Page 2, ligne 13 - page 8, ligne 4 * <br> --- | 1 | B 01 J 8/02 <br> F 25 B 17/08 <br> C 09 K 5/00 |
| D,A | REVUE PHYS. APPL., vol. 18, no. 2, février 1983, pages 107-112, S. MAURAN et al.: "Optimisation des densités énergétiques de systèmes de stockage chimique basés sur des réactions solide-gaz renversables" <br> --- | | |
| A | FR-A-2 593 588 (NISHIYODO AIR CONDITIONER) <br> --- | | |
| A | FR-A-2 546 278 (COMMISSARIAT A L'ENERGIE ATOMIQUE) <br> ----- | | |

**DOMAINES TECHNIQUES RECHERCHES (Int. Cl.4)**

B 01 J
F 25 B
C 09 K
F 24 J

**Le présent rapport a été établi pour toutes les revendications**

| Lieu de la recherche | Date d'achèvement de la recherche | Examinateur |
|---|---|---|
| LA HAYE | 12-12-1988 | BOETS A.F.J. |